# EUROPÄISCHE PATENTSCHRIFT

(11) **EP 3 908 391 B1**
(45) Veröffentlichungstag und Bekanntmachung des Hinweises auf die Patenterteilung: **23.11.2022**
(21) Anmeldenummer: 19816287.7
(22) Anmeldetag: 04.12.2019
(51) Int. Cl.: B01D 46/00, B01D 46/24

(54) **FILTERSYSTEM ZUR AUFREINIGUNG VON EINEM MIT PARTIKELN BELADENEN GASSTROM UND ANORDNUNG ZUR AUFREINIGUNG VON EINEM MIT PARTIKELN BELADENEN GASSTROM EINES FLUIDISIERUNGSAPPARATES MITTELS EINES FILTERSYSTEMS**
FILTER SYSTEM FOR PURIFYING A GAS FLOW CHARGED WITH PARTICLES, AND ARRANGEMENT FOR PURIFYING A GAS FLOW, CHARGED WITH PARTICLES, OF A FLUIDISING APPARATUS BY MEANS OF A FILTER SYSTEM
SYSTÈME DE FILTRATION SERVANT À PURIFIER UN FLUX DE GAZ CHARGÉ DE PARTICULES, ET AGENCEMENT SERVANT À PURIFIER UN FLUX DE GAZ CHARGÉ DE PARTICULES D'UN APPAREIL DE FLUIDISATION AU MOYEN D'UN SYSTÈME DE FILTRATION

(30) Priorität: 11.01.2019 DE 102019200304
(43) Veröffentlichungstag der Anmeldung: 17.11.2021
(73) Patentinhaber: Glatt Gesellschaft mit beschränkter Haftung, 79589 Binzen (DE)
(72) Erfinder: THIES, Jochen, 79540 Lörrach (DE); ZIMMERMANN, Dirk, 79664 Wehr (DE); GOTTSCHLING, Heinz, 79576 Weil am Rhein, Ortsteil Märkt (DE)
(74) Vertreter: Patentanwälte Magenbauer & Kollegen Partnerschaft mbB
(86) Internationale Anmeldenummer: PCT/EP2019/083636
(87) Internationale Veröffentlichungsnummer: WO 2020/143962

(56) Entgegenhaltungen:
- EP-A1- 1 457 246
- EP-A1- 3 326 706
- AT-B- 371 366
- DE-A1- 3 420 211
- DE-A1- 4 440 773
- US-A1- 2010 101 737

## Beschreibung

Die Erfindung betrifft ein Filtersystem zur Aufreinigung von einem mit Partikeln beladenen Gasstrom, wobei das eine eine Mittelachse aufweisende Filtergehäuse umfassende Filtersystem eine das Filtergehäuse in einen Rohgasraum und einen Reingasraum trennende, eine Filteraußenfläche und eine Filterinnenfläche aufweisende Filtervorrichtung zur Abscheidung der Partikel aus dem Gasstrom und eine eine Reinigungsdüse aufweisende erste Reinigungsvorrichtung zur Abreinigung der Filtervorrichtung bei unterbrochener Filtrierbeaufschlagung umfasst, wobei bei unterbrochener Filtrierbeaufschlagung die Filtervorrichtung (1) und die erste Reinigungsvorrichtung (2) relativ zueinander bewegbar sind, sodass die mit Partikeln verunreinigte Filteraußenfläche (16) und/oder Filterinnenfläche (17) der Filtervorrichtung (1) durch die Reinigungsdüse (20) der ersten Reinigungsvorrichtung (2) abreinigbar ist.

Des Weiteren umfasst die Erfindung eine Anordnung zur Aufreinigung von einem mit Partikeln beladenen Gasstrom eines Fluidisierungsapparates mittels eines Filtersystems.

Filtersysteme zur Aufreinigung von einem mit Partikeln beladenen Gasstrom, insbesondere aus Fluidisierungsapparaten, wie Wirbel- oder Strahlschichttrocknern, gehören seit langem zum Stand der Technik.

Eine technische Lösung wird durch die EP 3 075 445 A1 gezeigt, wobei oberhalb eines Fluidisierungsapparates eine Filterpatronen umfassende Filtervorrichtung angeordnet ist, wobei die Filterpatronen als Metallfilter ausgebildet sind. Die Reinigung der Filtervorrichtung erfolgt hierbei bei unterbrochener Filterbeaufschlagung über einen getakteten Druckluftstoß, der von einer über eine Zuleitung mit Druckluft versorgten Filterreinigungsvorrichtung erzeugt wird.

Die WO 2004/101133 A2 offenbart einen Wirbelschichtvorrichtung zum Granulieren und Beschichten mit mindestens einem im Wesentlichen konusförmigen Produktbehälter, einem über dem Produktbehälter angeordneten Filtergehäuse mit eingesetzten Filtern und einem unter dem konusförmigen Produktbehälter angeordneten Gehäuseunterteil mit einer Prozessluftzuführung. Bei nachlassender Filterleistung werden bei unterbrochener Filterbeaufschlagung die als Filterpatronen ausgebildeten Metallfilter ausgewechselt und anschließend manuell bspw. mit einer Reinigungsflüssigkeit gereinigt.

In der EP 1 457 246 A1 wird eine Produktbearbeitungsvorrichtung für staubende Materialien offenbart. Die Produktbearbeitungsvorrichtung weist vier Reinigungseinrichtungen zur Abgasreinigung der in der Produktbearbeitungsvorrichtung angeordneten Filter auf, wobei die Filter durch die Reinigungseinrichtungen von innen und/oder außen abreinigbar sind. Hierzu sind die Filter verfahrbar an der Produktbearbeitungsvorrichtung angeordnet.

DE 34 20 211 A1 offenbart eine Filteranlage bestehend aus einer Vielzahl von Gewebefilterelementen mit einer zugeordneten Vorrichtung zur Druckluftabreinigung der Gewebefilterelemente, wobei die Gewebefilterelemente in beweglichen, seitlich durch Trennwände gegeneinander abgeschotteten Filtergruppen angeordnet sind und wobei die Abreinigung jeweils einer einzigen Filtergruppe in einer gegen die übrigen Anlagenteile abgeschirmten Reinigungszone erfolgt.

US 2010/010737 A1 zeigt ein Filtersystem, das bevorzugt in einem Fluidisierungsapparat angeordnet ist. Das Filtersystem verfügt über Filterelemente und ein Reinigungssystem für die Filterelemente, wobei das Reinigungssystem starre und bewegliche Reinigungsdüsen aufweist. Die starren Reinigungsdüsen ist hierbei im mit Partikeln beladenen Gasraum, die auf Lanzen verfahrbaren Reinigungsdüsen sind in den Filterelementen im von Partikeln abgereinigten Gasraum angeordnet.

Die AT 371 366 B betrifft eine Vorrichtung zur regenerierenden Reinigung eines aus körnigem Material bestehenden Filterbettes, wobei die Reinigungs-/Regenerierungsvorrichtung im Inneren des Filterbettes angeordnet ist und relativ zum Filterbett beweglich gelagert ist. Beim Reinigungs-/Regenerierungsvorgang wird Reingas aus der Reinigungs-/Regenerierungsvorrichtung auf das Filterbett gedüst, sodass sich das körnige Material des Filterbettes regeneriert oder abgereinigt wird.

In der EP 3 326 706 wird eine Filtereinrichtung zum Filtern von Gas offenbart, mit einem Filterelement, das einen ringförmigen Filterkörper aus Filtermaterial, eine erste Endscheibe an einem ersten Längsende des Filterkörpers und eine zweite Endscheibe an einem zweiten Längsende des Filterkörpers aufweist, mit einer Reinigungseinrichtung zum Abreinigen des Filtermaterials, die im Inneren des Filterelements eine Rotationsdüse aufweist, die eine sich koaxial zur Längsmittelachse des Filterelements erstreckende, die zweite Endscheibe durchsetzende Stange und wenigstens ein an der Stange um die Längsmittelachse des Filterelements drehbar gelagertes Düsenrohr zum Rückspülen des Filtermaterials aufweist, mit einem Träger, an dem das Filterelement an der ersten Endscheibe so befestigt ist, dass die erste Endscheibe an einer Rohseite des Trägers eine Durchtrittsöffnung des Trägers einfasst, wobei die Reinigungseinrichtung eine Halterung aufweist, die an einer Reinseite des Trägers abgestützt ist und die einen Druckanschluss zum Zuführen eines Rückspülgases zur Rotationsdüse aufweist, wobei der Druckanschluss durch einen axialen ersten Endabschnitt der Stange hindurch mit dem jeweiligen Düsenrohr fluidisch verbunden ist, wobei der Druckanschluss mit dem ersten Endabschnitt axial fest verbunden ist.

Die DE 44 40 773 A1 offenbart eine Vorrichtung für das Abtrennen von Partikeln und/oder pulverförmigem Material aus einem Gasstromumfassend eine Einrichtung für die In-Situ-Reinigung, ein Gehäuse, das eine geschlossene Kammer mit einem Einlass für Pulver und Gasdefiniert, einem Auslass in einem unteren Abschnitt des Gehäuses für Partikel und/oder pulverförmiges Material, einem Auslass für filtriertes Gas und Filterelemente, die zwischen dem Einlass und dem Gasauslass angeordnet sind, und so befestigt sind, dass das Gas durchdiese Filterelemente hindurchströmen muss, um den Gasauslass zu erreichen, wobei erfindungsgemäß die Spüleinrichtung für das Einführen von Spülflüssigkeit in der Kammer angeordnet ist, und so angeordnet ist, dass sie das Innere des Gehäuses und die Filterelemente reinigt.

Bei anderen bisherigen technischen Lösungen zur Reinigung von Filtervorrichtungen werden die als Metallfilterpatronen ausgebildeten Filtervorrichtungen im Rohgasraum von außen benetzt und gereinigt. Zudem wird der Reingasraum gereinigt, wobei die aus dem Reingasraum in die Filterpatronen fließende Reinigungsflüssigkeit nur durch das metallische Filtergewebe abfließen kann. Dies führt dazu, dass in der Reinigungsflüssigkeit enthaltene, aus dem Gasstrom abgetrennte Partikel das metallische Filtergewebe von innen (Reingasraum) nach außen (Rohgasraum) zusetzen. In der Folge kann die Reinigungsflüssigkeit im unteren Bereich der metallischen Filterpatrone nicht mehr durch das metallische Filtergewebe abfließen und die Filterpatronen müssen ausgebaut und manuell nachgereinigt werden.

Allen im Stand der Technik dargestellten technischen Lösungen ist gemein, dass die als Filterpatronen ausgebildeten Filtervorrichtungen von den aus dem Gasstrom abgetrennten Partikeln nicht gut abreinigbar sind.

Aufgabe der Erfindung ist es daher ein Filtersystem bereitzustellen, dessen Filtriervorrichtung durch eine Reinigungsvorrichtung in verbesserter Art und Weise reinigbar ist.

Diese Aufgabe wird bei einem Filtersystem eingangs genannter Art dadurch gelöst, dass eine eine Reinigungsdüse (28) aufweisende zweite Reinigungsvorrichtung (29) im Rohgasraum (8) des Filtersystems (3) angeordnet ist, wobei die Reinigungsdüse (28) der zweiten Reinigungsvorrichtung (29) radial von der Mittelachse X-X in Richtung Filtergehäusewandung (30) und in entgegengesetzter Richtung bewegbar ist. Eine als erste Reinigungsvorrichtung bezeichnete Reinigungsvorrichtung kann auch die einzige Reinigungsvorrichtung des Filtersystems sein. Zudem hat die Bezeichnung der Reinigungsvorrichtungen mit Zahlwörtern nichts mit der Anzahl an im Filtersystem vorhandenen Reinigungsvorrichtungen zu tun. Durch die Bewegung der Filtervorrichtung und der ersten Reinigungsvorrichtung bei unterbrochener Filtrierbeaufschlagung relativ zueinander wird die Filteraußenfläche und/oder die Filterinnenfläche (Filtergewebe) besser von den durch die Filtervorrichtung aus dem Gasstrom abgetrennten Partikeln abgereinigt, sodass die Filtervorrichtung nach dem Abreinigungsvorgang wieder zumindest im Wesentlichen die ursprüngliche Filterleistung aufweist. Vorteilhafterweise verdüst die Reinigungsvorrichtung ein Reinigungsfluid, insbesondere eine Reinigungsflüssigkeit.

Vorteilhafterweise ist eine eine Reinigungsdüse aufweisende zweite Reinigungsvorrichtung im Rohgasraum des Filtersystems angeordnet. Durch die zweite Reinigungsvorrichtung ist somit die Abreinigung der Filteraußenfläche des Filterelements durchführbar. Zudem kann die durch die Filterflächen hindurchströmende Reinigungsflüssigkeit durch die Öffnung im Boden der Filtervorrichtung abfließen, ohne dass die mit Partikeln beladene Reinigungsflüssigkeit die Filterfläche zusetzt.

Die Reinigungsdüse der zweiten Reinigungsvorrichtung ist radial von der Mittelachse in Richtung Filtergehäusewandung und in entgegengesetzter Richtung bewegbar. Hierdurch kann an stark mit Partikeln zugesetzten Teilen der Filteraußenflächen bspw. durch ein Annähern der zweiten Reinigungsvorrichtung an die Filtervorrichtung der Druck erhöht werden und so eine bessere Abreinigung der Filteraußenfläche der Filterelemente der Filtervorrichtung erfolgen.

Durch das Konzept der relativ zur ersten Reinigungsvorrichtung bewegbaren Filtervorrichtung wird die Abreinigung des Filtergewebes der Filtervorrichtung deutlich verbessert. Aufgrund des immer gleichen Abstands der Reinigungsdüsen zu dem zu reinigenden Filtergewebe der Filtervorrichtung wird die Filtervorrichtung gleichmäßig und reproduzierbar gereinigt.

Nach einer vorteilhaften Ausgestaltung des erfindungsgemäßen Filtersystems ist bei unterbrochener Filtrierbeaufschlagung die Filtervorrichtung relativ zu der ersten Reinigungsvorrichtung bewegbar. Aufgrund der Bewegung der Filtervorrichtung relativ zur Reinigungsvorrichtung wird sichergestellt, dass die Reinigungsvorrichtung die gesamte Filtervorrichtung abreinigt und gleichzeitig der notwendige Platzbedarf für die sogenannte Cleaning in Place (CIP) Reinigung des Filtersystems, insbesondere der Filtervorrichtung möglichst minimal ist. Die Reinigungsvorrichtung wird vorzugsweise beim Reinigungsvorgang nicht bewegt. Bevorzugt ist die Filtervorrichtung in Achsrichtung der Mittelachse bewegbar.

Des Weiteren weist die Filtervorrichtung vorteilhafterweise eine Anzahl an Filterelementen und die erste Reinigungsvorrichtung eine der Anzahl an Filterelementen entsprechende Anzahl an Reinigungslanzen auf. Hierbei ist bevorzugt das Filterelement als Metallfilter, insbesondere als Metallfilterpatrone, ausgebildet. Besonders bevorzugt umfasst die Filtervorrichtung sechs Filterelemente und die erste Reinigungsvorrichtung sechs Reinigungslanzen. Hierdurch wird sichergestellt, dass die Reinigungsvorrichtung optimal an die Filtervorrichtung angepasst ist und jedes Filterelement eine als Reinigungslanze ausgebildete Reinigungsvorrichtung zur Abreinigung der mittels Filtervorrichtung aus dem Gasstrom abgetrennten Partikel aufweist.

Entsprechend einer weiteren erfindungsgemäßen Fortbildung ist die erste Reinigungsvorrichtung im Reingasraum angeordnet. Hierdurch ist es möglich die Filterinnenfläche optimal abzureinigen, sodass das Reinigungsfluid, insbesondere eine Reinigungsflüssigkeit, zumindest teilweise von innen nach außen geleitet wird und dort von der Filterfläche der Filtervorrichtung abläuft.

Ganz besonders bevorzugt weist im erfindungsgemäßen Filtersystem jedes Filterelement eine durch eine Reinigungslanze verschließbare Öffnung auf, wobei jede verschließbare Öffnung bei unterbrochener Filtrierbeaufschlagung durch die Bewegung der Filtervorrichtung und der ersten Reinigungsvorrichtung relativ zueinander geöffnet wird. Die verschließbare Öffnung ist besonders bevorzugt am tiefsten Punkt des Filterelements ausgebildet. Durch die verschließbare Öffnung des Filterelements, vorzugsweise im Boden des Filterelementes, strömt das bei der Reinigung der Filtervorrichtung auf die Filterflächen der Filterelemente versprühte Reinigungsfluid, insbesondere eine Reinigungsflüssigkeit, bei unterbrochener Filtrierbeaufschlagung durch die aufgrund der Relativbewegung offene Öffnung ab. Hierdurch wird sichergestellt, dass die mit Partikeln beladene Reinigungsflüssigkeit stets optimal von der Filtervorrichtung abfließen kann, sodass die Filtervorrichtung, insbesondere die einzelnen Filterelemente der Filtervorrichtung, am Boden durch ein Aufstauen der mit Partikeln beladenen Reinigungsflüssigkeit nicht zugesetzt werden.

Entsprechend einer zusätzlichen vorteilhaften Ausgestaltung des erfindungsgemäßen Filtersystems ist an der Reinigungslanze ein Federelement angeordnet. Insbesondere ist das Federelement am freien Ende der Reinigungslanze ausgebildet. Das Federelement ist konfiguriert, dass die verschließbare Öffnung durch die Reinigungslanze mit reproduzierbarem Druck verschließbar ist.

Nach einer Fortbildung des erfindungsgemäßen Filtersystems weist die Reinigungslanze einen als Stopfen ausgebildeten Abschnitt zum Verschließen der verschließbaren Öffnung des Filterelementes auf. Im Betriebszustand ist die verschließbare Öffnung der Filtervorrichtung durch den an der Reinigungslanze angeordneten Stopfen verschlossen. Hierdurch wird sichergestellt, dass im Betriebszustand der mit Partikeln beladene Gasstrom stets über die Filterflächen der Filterelemente strömt und die Partikel aus dem Gasstrom abgetrennt werden. Hierbei ist der als Stopfen ausgebildete Abschnitt am freien Ende der Reinigungslanze angeordnet. Bevorzugt ist die Reinigungsdüse benachbart zum als Stopfen ausgebildeten Abschnitt angeordnet. Die benachbart zum als Stopfen ausgebildeten Abschnitt angeordnete Reinigungsdüse ermöglicht, dass die gesamte Filtervorrichtung bei der Bewegung der Filtervorrichtung relativ zur Reinigungsvorrichtung abreinigbar ist.

Des Weiteren weist die zweite Reinigungsvorrichtung mehrere, mindestens zwei, Reinigungsdüsen auf, wobei die Reinigungsdüsen in Umfangsrichtung voneinander beabstandet sind. Hierdurch ist es möglich die Filteraußenflächen der Filterelemente der Filtervorrichtung noch besser abzureinigen. Besonders bevorzugt weist die zweite Reinigungsvorrichtung mehrere Reinigungsdüsen auf, wobei die Reinigungsdüsen in Umfangsrichtung voneinander äquidistant beabstandet sind. Ganz besonders bevorzugt weist die zweite Reinigungsvorrichtung eine eine Anzahl an Filterelementen der Filtervorrichtungen entsprechende Anzahl an Reinigungsdüsen auf.

Nach einer weiteren zusätzlichen Fortbildung des erfindungsgemäßen Filtersystems ist eine eine Reinigungsdüse aufweisende dritte Reinigungsvorrichtung im Rohgasraum des Filtersystems angeordnet ist. Bevorzugt ist die Reinigungsdüse der dritten Reinigungsvorrichtung radial von der Mittelachse in Richtung Filtergehäusewandung und in entgegengesetzter Richtung bewegbar. Hierdurch ermöglicht die dritte Reinigungsvorrichtung die Abreinigung der einzelnen Filterelemente der Filtervorrichtung dahingehend, dass die Filteraußenflächen aus dem Zentrum des Rohgasraums aus abreinigbar sind. Somit werden die Filterelemente der Filtervorrichtungen in Bezug auf die Filteraußenflächen vollständig von aus dem Gasstrom abgetrennten Partikeln gereinigt.

Nach einer zusätzlichen Ausgestaltung des erfindungsgemäßen Filtersystems ist eine eine Reinigungsdüse aufweisende vierte Reinigungsvorrichtung im Reingasraum des Filtersystems angeordnet. Bevorzugt ist die Reinigungsdüse der vierten Reinigungsvorrichtung schwenkbar im Reingasraum angeordnet ist. Die vierte im Reingasraum angeordnete Reinigungsvorrichtung ermöglicht ein Reinigen der inneren Oberflächen des Reingasraums von Partikeln, wobei die Reinigungsflüssigkeit über die verschließbare Öffnung in der Filtervorrichtungen abfließen kann.

Das Filtersystem weist darüber hinaus insbesondere einen als Behälter ausgebildeten Vorratsspeicher für das Reinigungsfluid auf. Durch den Vorratsspeicher wird ermöglicht, dass das Reinigungsfluid nicht mittels einer Leitung über weite Strecken transportiert werden muss.

In einer erfindungsgemäßen Weiterbildung des Filtersystems ist die Filtervorrichtung durch eine von einer Antriebseinheit angetriebenen Verschiebeeinrichtung bewegbar. Durch die Verschiebeeinrichtung ist es bevorzugt möglich die Filtervorrichtung des Filtersystems zu bewegen. Zur Reinigung der Filtervorrichtung wird die Filtervorrichtung in Achsrichtung der Mittelachse des Filtersystems verschoben. Hierzu ist die Verschiebeeinrichtung insbesondere teleskopierbar ausgebildet.

Das erfindungsgemäße Filtersystem wird vorzugsweise zur Aufreinigung von einem mit Partikeln beladenen Gasstrom eines Fluidisierungsapparates verwendet, wobei das Filtersystem nach einem der vorhergehenden Ansprüche ausgebildet ist und an dem Fluidisierungsapparat angeordnet ist. Mittels der erfindungsgemäßen Anordnung des Filtersystems an einem Fluidisierungsapparat, insbesondere an einem Wirbelschicht- oder Strahlschichtapparat, wird die Cleaning in Place (CIP, validierter Reinigungsprozess) Reinigung von Fluidisierungsapparaten, insbesondere mit Metallfiltern in Hinsicht auf die Reinigungsdauer und -wirkung optimiert.

Nachfolgend wird die Erfindung anhand der beiliegenden Zeichnung näher erläutert. Es zeigen
- Figur 1: eine teilweise geschnittene Seitenansicht eines eine Filtervorrichtung und eine erste Reinigungsvorrichtung aufweisenden, bevorzugten Filtersystems im Betriebszustand,
- Figur 2: eine teilweise geschnittene Seitenansicht des eine Filtervorrichtung und eine erste Reinigungsvorrichtung aufweisenden, bevorzugten Filtersystems bei unterbrochener Filtrierbeaufschlagung, wobei die Filtervorrichtung entlang einer Mittelachse eines Filtergehäuses relativ zu der als Reinigungslanzen ausgebildeten ersten Reinigungsvorrichtung innerhalb des Filtergehäuses verschoben ist,
- Figur 3: eine teilweise geschnittene Seitenansicht des eine Filtervorrichtung und eine erste Reinigungsvorrichtung aufweisenden, bevorzugten Filtersystems bei unterbrochener Filtrierbeaufschlagung, wobei die Filtervorrichtung entlang der Mittelachse des Filtergehäuses relativ zu der als Reinigungslanzen ausgebildeten ersten Reinigungsvorrichtung verschoben ist und sich außerhalb des Filtergehäuses befindet,
- Figur 4: eine Seitenansicht des teilweise geschnittenen bevorzugten Filtersystems im Betriebszustand gemäß der Schnittebene A-A in Figur 3,
- Figur 5: eine Untersicht auf das bevorzugte Filtersystem im Betriebszustand, wobei drei von sechs Filterelementen der Filtervorrichtung in einer Schnittdarstellung gezeigt sind,
- Figur 6: einen Schnitt entlang der in Figur 5 gezeigten Schnittebene B-B durch das bevorzugte Filtersystem,
- Figur 7: eine vergrößerte Darstellung gemäß Ausschnitt C in Fig. 6 durch das Filterelement, wobei die verschließbare Öffnung durch den als Stopfen ausgebildeten Abschnitt der Reinigungslanze verschlossen ist und
- Figur 8: eine vergrößerte Darstellung gemäß Ausschnitt C in Fig. 6 durch das Filterelement, wobei die verschließbare Öffnung offen ist.

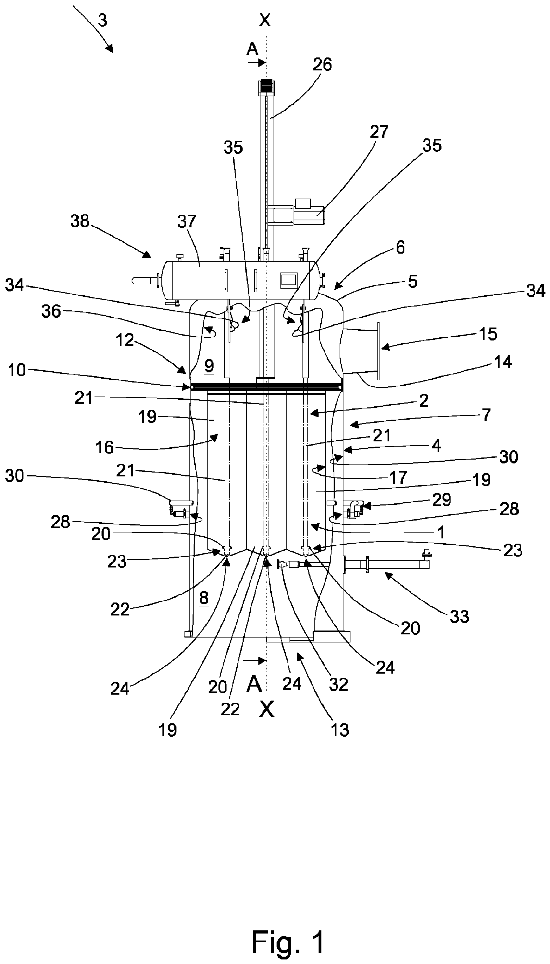

Fig. 1 zeigt eine teilweise geschnittene Seitenansicht eines eine Filtervorrichtung 1 und eine Reinigungsvorrichtung 2 aufweisenden, bevorzugten Filtersystems 3 im Betriebszustand zur Aufreinigung von einem mit Partikeln beladenen Gasstrom.

Das Filtersystem 3 umfasst ein einen Außenmantel 4 und einen als Klöpperboden 5 ausgebildeten Deckel 6 aufweisendes Filtergehäuse 7, die Filtervorrichtung 1 und die Reinigungsvorrichtung 2.

Die Filtervorrichtung 1 ist hierbei in dem eine Mittelachse X-X aufweisenden Filtergehäuse 7 angeordnet und unterteilt das Filtergehäuse 7 in einen Rohgasraum 8 und einen Reingasraum 9. Eine Abdichtung zwischen dem Rohgasraum 8 und dem Reingasraum 9 erfolgt mittels einer Dichtung 10, insbesondere mittels einer aufblasbaren Dichtung. Die Dichtung 10 wird durch eine ausgebildete Positioniereinrichtung 12 örtlich am Außenmantel 4 des Filtergehäuses 7 positioniert.

Ein durch das Filtersystem 3 zu reinigender, mit Partikeln beladener Gasstrom strömt von einem Einlass 13 in den Rohgasraum 8, von dort über die Filtervorrichtung 1 zur Aufreinigung des mit Partikeln beladenen Gasstroms in den Reingasraum 9 und über einen als Rohrstutzen 14 ausgebildeten Auslass 15 aus dem Reingasraum 9.

Hierbei weist die Filtervorrichtung 1 eine dem Rohgasraum 8 zugewandte Filteraußenfläche 16 und eine dem Reingasraum 9 zugewandte Filterinnenfläche 17 zur Abscheidung der Partikel aus dem Gasstrom auf. Zur Vergrößerung der Filterfläche umfasst die Filtervorrichtung 1 einzelne lösbar an einer Filterplatte 18 montierte Filterelemente 19. Die Filterelemente 19 der Filtervorrichtung 1 sind im Ausführungsbeispiel als Metallfilter, insbesondere als Metallfilterpatrone, ausgebildet.

Die erste Reinigungsvorrichtung 2 weist zur Abreinigung der Filtervorrichtung 1 bei unterbrochener Filtrierbeaufschlagung eine Reinigungsdüse 20 auf. Die erste Reinigungsvorrichtung 2 umfasst Reinigungslanzen 21, die sich reingasraumseitig in die Filterelemente 19 erstrecken. Die Reinigungslanze 21 weist einen als Stopfen 22 ausgebildeten Abschnitt 23 zum Verschließen einer verschließbaren Öffnung 24 des Filterelementes 19 auf. Der als Stopfen 22 ausgebildete Abschnitt 23 ist im Ausführungsbeispiel am freien Ende 25 der Reinigungslanze 2 angeordnet. Die Reinigungsdüsen 20 sind hierbei an den Reinigungslanzen 21 der ersten Reinigungsvorrichtung 2 benachbart zum als Stopfen 22 ausgebildeten Abschnitt 23 am freien Ende 25 der Reinigungslanze 21 angeordnet.

Bevorzugt weist die Filtervorrichtung 1 eine Anzahl an Filterelementen 19 und die erste Reinigungsvorrichtung 2 eine der Anzahl an Filterelementen 19 entsprechende Anzahl an Reinigungslanzen 21 auf. Im Ausführungsbeispiel umfasst die Filtervorrichtung 1 des bevorzugten Filtersystems 3 sechs Filterelemente 19 und die erste Reinigungsvorrichtung 2 dementsprechend sechs Reinigungslanzen 21.

Jedes Filterelement 19 weist eine durch eine Reinigungslanze 21 verschließbare Öffnung 24 auf, wobei jede verschließbare Öffnung 23 bei unterbrochener Filtrierbeaufschlagung durch die Bewegung der Filtervorrichtung 1 und der ersten Reinigungsvorrichtung 2 relativ zueinander geöffnet wird. Hierbei ist an der Reinigungslanze 21 ein nicht dargestelltes Federelement angeordnet. Das Federelement ist am freien Ende 25 der Reinigungslanze 21 ausgebildet und derart konfiguriert, dass die verschließbare Öffnung 24 durch die Reinigungslanze 21 mit reproduzierbarem Druck verschließbar ist.

Die Filterplatte 18 der Filtervorrichtung 1 des bevorzugten Filtersystems 3 ist an einer von einer Antriebseinheit 26, insbesondere von einem Elektromotor oder dgl., angetriebenen Verschiebeeinrichtung 27 angeordnet. Hierdurch ist die Filtervorrichtung 1 relativ zu der ersten Reinigungsvorrichtung 2 verschiebbar beweglich im Filtergehäuse 7 angeordnet. Um die Filtervorrichtung 1 im bevorzugten Filtersystem 3 relativ zu der ersten Reinigungsvorrichtung 2 zu bewegen und ggf. aus dem Filtersystem 3 herauszufahren ist die Verschiebeeinrichtung 27 teleskopierbar ausgebildet.

Neben der ersten Reinigungsvorrichtung 2 weist das erfindungsgemäße Filtersystem 3 eine eine Reinigungsdüse 28 aufweisende zweite Reinigungsvorrichtung 29 im Rohgasraum 8 des Filtersystems 3 auf. Hierbei sind die Reinigungsdüsen 28 der zweiten Reinigungsvorrichtung 29 radial von der Filtergehäusewandung 30 in Richtung Mittelachse X-X und in entgegengesetzter Richtung verschiebbar beweglich angeordnet. Besonders bevorzugt sind die Reinigungsdüsen 28 an einer außerhalb des Filtersystems 3 an das Filtergehäuse 7 angepasste Leitung 31 nach Art eines Verteilerrohres angeordnet. Die zweite Reinigungsvorrichtung 29 umfasst mehrere Reinigungsdüsen 28, wobei die Reinigungsdüsen 28 in Umfangsrichtung des Filtergehäuses 7 voneinander beabstandet sind. Vorteilhafterweise sind die Reinigungsdüsen 28 in Umfangsrichtung äquidistant voneinander beabstandet. Ganz besonders bevorzugt entsprechen die Reinigungsdüsen 28 in ihrer Anzahl der Anzahl an Filterelementen 19.

Darüber hinaus ist bevorzugt im Filtersystem 3 eine eine Reinigungsdüse 32 aufweisende dritte Reinigungsvorrichtung 33 im Rohgasraum 8 des Filtersystems 3 angeordnet. Die Reinigungsdüse 32 der dritten Reinigungsvorrichtung 33 ist radial von der Mittelachse X-X in Richtung Filtergehäusewandung 30 und in entgegengesetzter Richtung bewegbar ist. Die dritte Reinigungsvorrichtung 33 ist zwischen den im Ausführungsbeispiel sechs Filterelementen 19 positioniert und reinigt die dem Rohgasraum 8 zugewandten Filteraußenfläche 16 im Zentrum des Rohgasraums 8 zwischen den Filterelementen 19 des bevorzugten Filtersystems 3.

Im Reingasraum 9 des bevorzugten Filtersystems 3 ist eine eine Reinigungsdüse 34 aufweisende vierte Reinigungsvorrichtung 35 angeordnet. Die Reinigungsdüse 34 der vierten Reinigungsvorrichtung 36 ist bevorzugt schwenkbar im Reingasraum 9 angeordnet, um die innere Oberfläche 36 des Filtergehäuses 7 im Reingasraum 9 zu reinigen. Das Reinigungsfluid, insbesondere die Reinigungsflüssigkeit fließt ebenfalls über die verschließbaren Öffnungen 24 in den Filterelementen 19 ab.

Das bevorzugte Filtersystem 3 weist für die unterschiedlichen Reinigungsvorrichtungen 2, 29, 33 und 35 im Ausführungsbeispiel einen als Behälter 37 ausgebildeten Vorratsspeicher 38 für das Reinigungsfluid, insbesondere die Reinigungsflüssigkeit, auf.

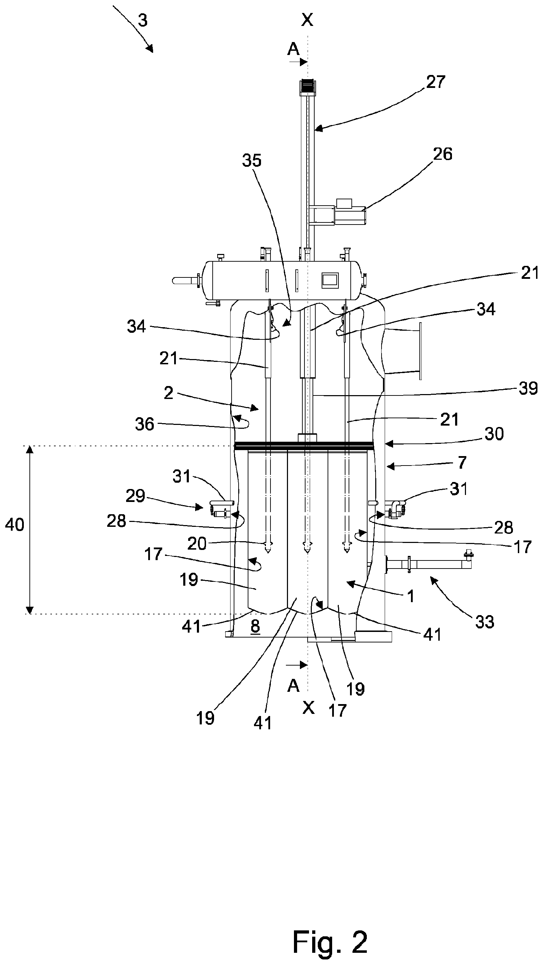

In Fig. 2 wird eine teilweise geschnittene Seitenansicht des die Filtervorrichtung 1 und die erste Reinigungsvorrichtung 2 aufweisenden, bevorzugten Filtersystems 3 bei unterbrochener Filtrierbeaufschlagung gezeigt. Im Gegensatz zu dem in Fig. 1 gezeigten bevorzugten Filtersystem 3 ist die Filtervorrichtung 1 entlang der Mittelachse X-X des Filtergehäuses 7 relativ zu der als Reinigungslanzen 21 ausgebildeten ersten Reinigungsvorrichtung 2 innerhalb des Filtergehäuses 7 verschoben.

Die Filtervorrichtung 1 des bevorzugten Filtersystems 3 ist an einer von einer Antriebseinheit 26, insbesondere von einem Elektromotor oder dgl., angetriebenen, teleskopierbaren Verschiebeeinrichtung 27 angeordnet, wobei der teleskopierbare Tragarm 39 der Verschiebeinrichtung 27 in Richtung Einlass 13 des bevorzugten Filtersystems 3 ausgefahren ist und die Filtervorrichtung 1 noch im Filtergehäuse 7 angeordnet ist.

Während der Bewegung der Filtervorrichtung 1 entlang der Mittelachse X-X des Filtergehäuse 7 relativ zu der als Reinigungslanzen 21 ausgebildeten ersten Reinigungsvorrichtung 2 sind die in Filtersystem 3 angeordneten Reinigungsvorrichtungen 2, 29, 33 und 35 in Betrieb, sodass die als Metallfilterpatronen ausgebildeten Filterelemente 19 der Filtervorrichtung 1 durch das von den Reinigungsvorrichtungen 2, 29, 33 und 35 verdüste Reinigungsfluid, insbesondere eine Reinigungsflüssigkeit, gereinigt wird. Durch das Konzept der relativ zur ersten Reinigungsvorrichtung 2 bewegbaren Filtervorrichtung 1, insbesondere der bewegbaren Filtervorrichtung 1 bei der als ausgebildeten Reinigungslanzen 21, feststehenden Reinigungsvorrichtung 2, wird die Abreinigung des Filtergewebes der Filtervorrichtung 1 deutlich verbessert. Aufgrund des immer gleichen Abstands der Reinigungsdüsen 20 zu dem zu reinigenden Filtergewebe der Filtervorrichtung 1 wird die Filtervorrichtung 1 gleichmäßig und reproduzierbar gereinigt.

Die erste Reinigungsvorrichtung 2 reinigt die Filterinnenflächen 17 der Filterelemente 19 mittels der am freien Ende 25 der Reinigungslanze 21 benachbart zum als Stopfen 22 ausgebildeten Abschnitt 23 angeordneten Reinigungsdüsen 20. Durch die Bewegung der Filtervorrichtung 1 relativ zur Reinigungsvorrichtung 2 und somit auch relativ zu den Reinigungsdüsen 20 werden die Filterinnenflächen 17 über der gesamten Filterhöhe 40 gereinigt. Die aus dem Gasstrom mittels der Filtervorrichtung 1 abgetrennten Partikel werden von der Reinigungsflüssigkeit aufgenommen. Die mit Partikeln beladene Reinigungsflüssigkeit fließt in Richtung Boden 41 der Filterelemente 19 und von dort durch die im Ausführungsbeispiel am tiefsten Punkt der Filterelemente 19 angeordnete, verschließbare Öffnung 24 aus der Filtervorrichtung 1 ab. Hierdurch wird ein Absetzen durch die aus dem Gasstrom abgetrennten und der Reinigungsflüssigkeit aufgenommenen Partikel im metallischen Filtergewebe der Filterelemente 19 verhindert.

Die zweite Reinigungsvorrichtung 29 reinigt mittels ihrer Reinigungsdüsen 28 und aufgrund der Bewegung der Filtervorrichtung 1 relativ zur Reinigungsvorrichtung 2 und somit auch relativ zu den Reinigungsdüsen 28 der zweiten Reinigungsvorrichtung 29 die Filteraußenflächen 16 über der gesamten Filterhöhe 40 ab.

Auch die dritte Reinigungsvorrichtung 33 reinigt die Filteraußenflächen 16 der Filtervorrichtung 1 über der gesamten Filterhöhe 40 durch die Bewegung der Filtervorrichtung 1 relativ zur dritten Reinigungsvorrichtung 33.

Hierbei reinigt die im Rohgasraum 8 angeordnete zweite Reinigungsvorrichtung 29 die Filteraußenflächen 16 der Filterelemente 19 zumindest über den Umfang des Filtergehäuses 7 und die dritte Reinigungsvorrichtung 33 reinigt die Filteraußenflächen 16 der Filtervorrichtung 1 aus der Mitte des Filtergehäuses 7 heraus. Die auf die Filteraußenflächen 16 aufgedüste Reinigungsflüssigkeit fließt an den Filteraußenflächen 16 der Filtervorrichtung 1 ab. Gegebenenfalls in die Filtervorrichtung 1 durch das metallische Filtergewebe der Filterelemente 19 eindringende Reinigungsflüssigkeit kann durch die am tiefsten Punkt des Filterelements 19 angeordnete, verschließbare Öffnung 24 aus dem Inneren der Filterelemente 19 ablaufen.

Des Weiteren sind die Reinigungsdüsen 28 der zweiten Reinigungsvorrichtung 29 radial von der Filtergehäusewandung 30 in Richtung Mittelachse X-X und entgegengesetzt bewegbar. Hierdurch ist bspw. bei einer starken Verschmutzung der Filteraußenflächen 16 eine verbesserte Reinigung der Filteraußenfläche 16 bzw. des Filtergewebes erreichbar. Besonders bevorzugt sind die Reinigungsdüsen 28 an einer außerhalb des Rohgasraums 8 an das Filtergehäuse 7 angepassten Leitung 31 nach Art eines Verteilerrohres angeordnet. Die zweite Reinigungsvorrichtung 29 umfasst mehrere Reinigungsdüsen 28, insbesondere eine den Filterelementen 19 der Filtervorrichtung 1 entsprechende Anzahl, im Ausführungsbeispiel bspw. sechs Reinigungsdüsen 28, wobei die Reinigungsdüsen 28 in Umfangsrichtung des Filtergehäuses 7 voneinander beabstandet sind, vorteilhafterweise sind die Reinigungsdüsen 28 in Umfangsrichtung äquidistant voneinander beabstandet.

Auch die dritte Reinigungsvorrichtung 33 ist im Rohgasraum 8 angeordnet, wobei die hier in Fig. 2 von den Filterelementen 19 verdeckte Reinigungsdüse 32 der dritten Reinigungsvorrichtung 33 radial von der Mittelachse X-X in Richtung Filtergehäusewandung 30 und in die entgegengesetzte Richtung bewegbar ist. Hierdurch ist bspw. bei einer starken Verschmutzung der Filteraußenflächen 16 im Bereich der Mittelachse X-X, d.h. dem Zentrum des Filtergehäuses 7, eine verbesserte Reinigung der Filteraußenfläche 16 der Filterelemente 19 erreichbar.

Im Reingasraum 9 des bevorzugten Filtersystems 3 ist eine eine Reinigungsdüse 34 aufweisende vierte Reinigungsvorrichtung 35 angeordnet. Die Reinigungsdüse 34 der vierten Reinigungsvorrichtung 35 ist bevorzugt schwenkbar im Reingasraum 9 angeordnet, um die innere Oberfläche 36 des Filtergehäuses 7 im Reingasraum 9 zu reinigen. Das Reinigungsfluid, insbesondere die Reinigungsflüssigkeit fließt über die verschließbaren Öffnungen 24 in den Filterelementen 19 aus der Filtervorrichtung 1 ab.

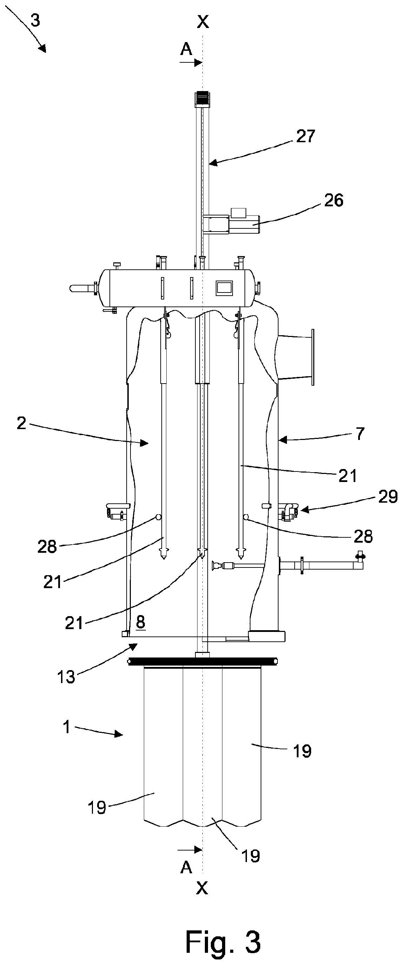

Fig. 3 stellt eine teilweise geschnittene Seitenansicht des die Filtervorrichtung 1 und die erste Reinigungsvorrichtung 2 aufweisenden, bevorzugten Filtersystems 3 bei unterbrochener Filtrierbeaufschlagung dar, wobei die Filtervorrichtung 1 entlang der Mittelachse X-X des Filtergehäuses 7 relativ zu der als Reinigungslanzen 21 ausgebildeten ersten Reinigungsvorrichtung 2 verschoben ist und sich außerhalb des Filtergehäuses 7 befindet.

Im Bereich des Rohgasraums 8 sind die in Umfangsrichtung des Filtergehäuses 7 bevorzugt äquidistant voneinander beabstandeten Reinigungsdüsen 28 der zweiten Reinigungsvorrichtung 29 angeordnet.

Die eine als aufblasbare Dichtung ausgebildete Dichtung 10 aufweisende Filtervorrichtung 1 des bevorzugten Filtersystems 3 ist an einer von einer Antriebseinheit 26, insbesondere von einem Elektromotor oder dgl., angetriebenen, teleskopierbaren Verschiebeeinrichtung 27 angeordnet, wobei der ausfahrbare Tragarm 39 der teleskopierbaren Verschiebeinrichtung 27 in Richtung Einlass 13 des bevorzugten Filtersystems 3 ausgefahren und die Filtervorrichtung 1 außerhalb des Filtergehäuses 7 positioniert ist. Hierdurch ist es möglich die gesamte Filtervorrichtung 1 außerhalb der Filtervorrichtung 1 manuell zu reinigen oder die Filterelemente 19 von der Filterplatte 18 auszutauschen, entweder in ihrer Gesamtheit oder einzelne Baugruppen oder -teile, wie bspw. die als metallische Filterpatronen ausgebildeten Filterelemente 19 der Filtervorrichtung 1.

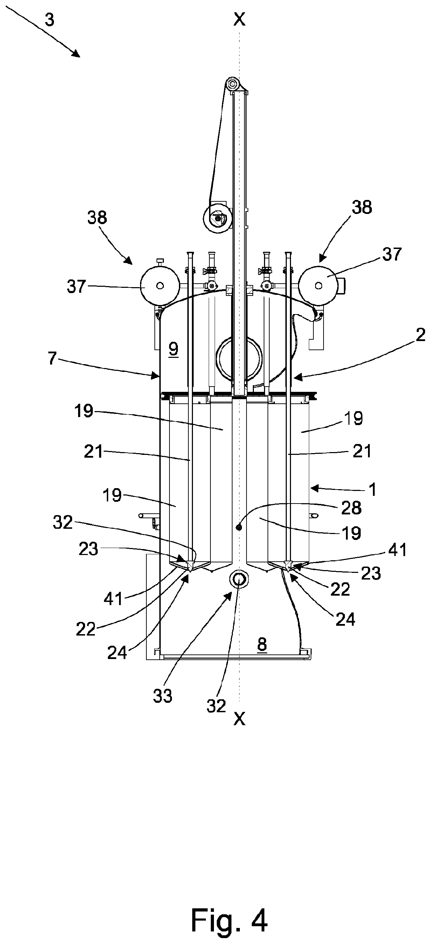

In Fig. 4 wird eine Seitenansicht des teilweise geschnittenen bevorzugten Filtersystems 3 im Betriebszustand gemäß der Schnittebene A-A in Fig. 3 gezeigt.

Die Filtervorrichtung 1 ist im Filtergehäuse 7 angeordnet und unterteilt das Filtergehäuse 7 in den Rohgasraum 8 und den Reingasraum 9. Im Ausführungsbeispiel umfasst die Filtervorrichtung 1 sechs Filterelemente 19. Die als metallische Filterpatronen ausgebildeten Filterelemente 19 weisen einen trichterförmigen, eine verschließbare Öffnung 24 umfassenden Boden 41 auf. Die verschließbare Öffnung 24 wird im Betriebszustand des Filtersystems 3 durch einen als Stopfen 22 ausgebildeten Abschnitt 23 am freien Ende 25 der Reinigungslanze 21 abgedichtet und verschlossen. Die Abdichtung der verschließbaren Öffnung 24 erfolgt stets über ein an der Reinigungslanze 21 angeordnetes, nicht dargestelltes Federelement, sodass der zum Verschließen der Öffnung 24 erforderliche Druck reproduzierbar ist.

Des Weiteren sind die sechs Filterelemente 19 der Filtervorrichtung 1 dergestalt im Filtergehäuse 7 angeordnet, dass die Filtervorrichtung 1 relativ zur ersten Reinigungsvorrichtung 2 bewegbar ist und die zwischen den Filtergehäusewandungen 30 verfahrbare Reinigungsdüse 32 der dritten Reinigungsvorrichtung 33 diese Relativbewegung nicht beeinträchtigt.

Die erste Reinigungsvorrichtung 2 weist im Ausführungsbeispiel sechs Reinigungsdüsen 20 umfassende Reinigungslanzen 21 auf. Jede der sechs Reinigungslanzen 21 ist mit dem als Behälter 37 ausgebildeten Vorratsspeicher 38 für Reinigungsfluid verbunden, sodass die Reinigungsdüsen 20 der ersten Reinigungsvorrichtung 2 stets mit Reinigungsfluid, insbesondere Reinigungsflüssigkeit, verbunden sind.

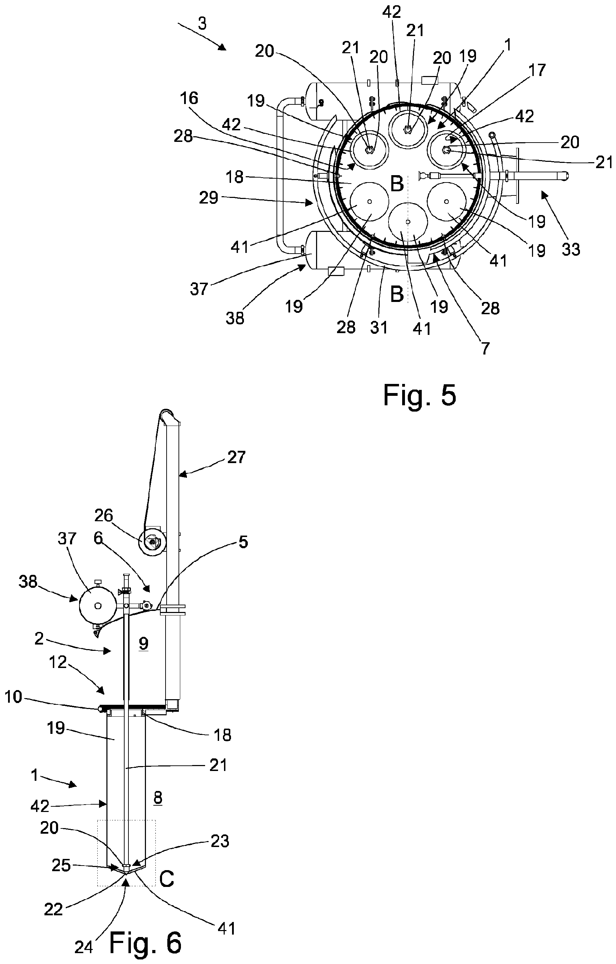

Fig. 5 zeigt eine Untersicht auf das bevorzugte Filtersystem 3 im Betriebszustand, wobei drei von sechs Filterelementen 19 der Filtervorrichtung 1 im Schnitt dargestellt sind.

Die Filtervorrichtung 1 weist sechs an der Filterplatte 18 angeordnete Filterelemente 19 auf, wobei die im Schnitt dargestellten drei Filterelemente 19 die Filteraußenfläche 16 und die Filterinnenfläche 17 des Filtergewebes 42 zeigen. Die drei nicht im Schnitt dargestellten Filterelemente 19 umfassen den Boden 41 mit der im tiefsten Punkt des Bodens 41 angeordneten, durch die Reinigungslanzen 21 verschließbaren Öffnung 24.

Bei den in Schnittebene dargestellten Filterelementen 19 sind an den Reinigungslanzen 21 der ersten Reinigungsvorrichtung 2 jeweils um den Umfang der Reinigungslanzen 21 sechs Reinigungsdüsen 20 angeordnet. Die als Reinigungslanzen 21 ausgebildete erste Reinigungsvorrichtung 2 ist mit den als Behälter 37 ausgebildeten Vorratsspeichern 38 für das Reinigungsfluid verbunden.

Zudem sind in Fig. 5 die zweite und dritte Reinigungsvorrichtung 29 und 33 dargestellt. Die zweite Reinigungsvorrichtung 29 weist mit der an das Filtergehäuse 7 angepassten Leitung 31 verbundene sechs Reinigungsdüsen 28 auf, die äquidistant um den Umfang des Filtergehäuses 7 angeordnet sind. Die dritte Reinigungsvorrichtung 33 ist zwischen den drei im Schnitt dargestellten Filterelementen 19 und den drei nicht im Schnitt dargestellten Filterelementen 19 angeordnet, sodass durch die Reinigungsdüse 32 bei unterbrochener Filtrierbeaufschlagung die Filteraußenflächen 16 der Filterelemente 19 im Zentrum des Filtergehäuses 7 reinigbar sind.

Fig. 6 stellt einen Schnitt entlang der in Fig. 5 gezeigten Schnittebene B-B durch das bevorzugte Filtersystem 3 dar.

Das als metallische Filterpatrone ausgebildete Filterelement 19 der Filtervorrichtung 1 ist in der Filterplatte 18 angeordnet. Die Filterplatte 18 umfasst eine im Ausführungsbeispiel als aufblasbare Dichtung ausgebildete Dichtung 10, die in einer ausgebildeten Positioniereinrichtung 12 angeordnet ist. Das Filterelement 19 umfasst das Filtergewebe 42 sowie den eine verschließbare Öffnung 24 aufweisenden Boden 41.

Die Filterplatte 18 ist zudem an der von der Antriebseinheit 26 angetriebenen Verschiebeeinrichtung 27 angeordnet.

Am als Klöpperboden 5 ausgebildeten Deckel 6 ist der als Behälter 37 ausgebildete Vorratsspeicher 38 angeordnet, der das Reinigungsfluid, insbesondere Reinigungsflüssigkeit, bevorratet. Der Vorratsspeicher 38 ist mit der als Reinigungslanze 21 ausgebildeten ersten Reinigungsvorrichtung 2 verbunden. Reinigungslanze 21 erstreckt sich im Betriebszustand im Inneren des Filterelementes 19 bis zu dessen Boden 41. Der als Stopfen 22 ausgebildete Abschnitt 23 am freien Ende 25 der Reinigungslanze 21 verschließt die am tiefsten Punkt des Bodens 41 angeordnete verschließbare Öffnung 24, sodass im Betriebszustand die aus dem Gasstrom abzutrennenden Partikel ausschließlich über das Filtergewebe 42 vom Rohgasraum 8 in den Reingasraum 9 strömen können.

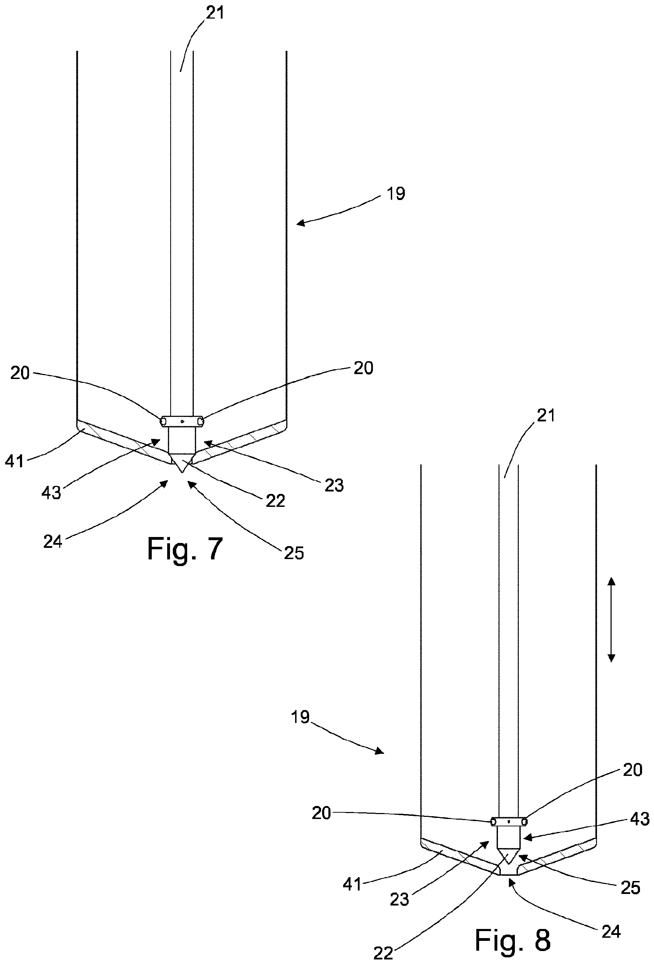

In Fig. 7 wird eine vergrößerte Darstellung gemäß Ausschnitt C in Fig. 6 durch das Filterelement 19 gezeigt, wobei die verschließbare Öffnung 24 durch den als Stopfen 22 ausgebildeten Abschnitt 23 der Reinigungslanze 21 verschlossen wird. Zwischen den an der Reinigungslanze 21 benachbart zum Abschnitt 23 angeordneten Reinigungsdüsen 20 der ersten Reinigungsvorrichtung 2 und dem freien Ende 25 ist ein Federelement 43 angeordnet. Das Federelement 43 ist konfiguriert, dass die im Boden 41 angeordnete verschließbare Öffnung 24 mit reproduzierbarem Druck durch den Stopfen 22 der Reinigungslanze 21 verschließbar ist. Der Stopfen 22 ist vorzugsweise aus einem Elastomer hergestellt und mittels des Federelements 43 federnd gelagert.

Fig. 8 stellt eine vergrößerte Darstellung gemäß Ausschnitt C in Fig. 6 durch das Filterelement 19 dar, wobei die verschließbare Öffnung 24 durch die Bewegung der als Filterelement 19 ausgebildeten Filtervorrichtung 1 relativ zur feststehenden als Reinigungslanze 21 ausgebildeten ersten Reinigungsvorrichtung 2 bei unterbrochener Filtrierbeaufschlagung offen ist. Durch die am tiefsten Punkt des Bodens 41 des Filterelements 19 angeordnete, verschließbare Öffnung 24 kann die zur Reinigung der Filterinnen- und/oder Filteraußenflächen 16, 17 des Filtergewebes 42 des Filterelements 19 der Filtervorrichtung 1 auf die Filterinnen- und/oder Filteraußenflächen 16, 17 aufgedüste Reinigungsflüssigkeit ablaufen.

## Patentansprüche

1. Filtersystem (3) zur Aufreinigung von einem mit Partikeln beladenen Gasstrom, wobei das eine eine Mittelachse X-X aufweisende Filtergehäuse (7) umfassende Filtersystem (3) eine das Filtergehäuse (7) in einen Rohgasraum (8) und einen Reingasraum (9) trennende, eine Filteraußenfläche (16) und eine Filterinnenfläche (17) aufweisende Filtervorrichtung (1) zur Abscheidung der Partikel aus dem Gasstrom und eine eine Reinigungsdüse (20) aufweisende erste Reinigungsvorrichtung (2) zur Abreinigung der Filtervorrichtung (1) bei unterbrochener Filtrierbeaufschlagung umfasst, wobei bei unterbrochener Filtrierbeaufschlagung die Filtervorrichtung (1) und die erste Reinigungsvorrichtung (2) relativ zueinander bewegbar sind, sodass die mit Partikeln verunreinigte Filteraußenfläche (16) und/oder Filterinnenfläche (17) der Filtervorrichtung (1) durch die Reinigungsdüse (20) der ersten Reinigungsvorrichtung (2) abreinigbar ist, **dadurch gekennzeichnet, dass** eine eine Reinigungsdüse (28) aufweisende zweite Reinigungsvorrichtung (29) im Rohgasraum (8) des Filtersystems (3) angeordnet ist, wobei die Reinigungsdüse (28) der zweiten Reinigungsvorrichtung (29) radial von der Mittelachse X-X in Richtung Filtergehäusewandung (30) und in entgegengesetzter Richtung bewegbar ist.

2. Filtersystem (3) nach Anspruch 1, **dadurch gekennzeichnet, dass** bei unterbrochener Filtrierbeaufschlagung die Filtervorrichtung (1) relativ zu der ersten Reinigungsvorrichtung (2) bewegbar ist.

3. Filtersystem (3) nach Anspruch 1 oder 2, **dadurch gekennzeichnet, dass** die Filtervorrichtung (1) in Achsrichtung der Mittelachse X-X bewegbar ist.

4. Filtersystem (3) nach einem der vorhergehenden Ansprüche, **dadurch gekennzeichnet, dass** die Filtervorrichtung (1) eine Anzahl an Filterelementen (19) und die erste Reinigungsvorrichtung (2) eine der Anzahl an Filterelementen (19) entsprechende Anzahl an Reinigungslanzen (21) aufweist, wobei die Filtervorrichtung (1) zweckmäßigerweise sechs Filterelemente (19) und die erste Reinigungsvorrichtung (2) sechs Reinigungslanzen (21) umfasst.

5. Filtersystem (3) nach einem der vorhergehenden Ansprüche, **dadurch gekennzeichnet, dass** jedes Filterelement (19) eine durch eine Reinigungslanze (21) verschließbare Öffnung (24) aufweist, wobei jede verschließbare Öffnung (24) bei unterbrochener Filtrierbeaufschlagung durch die Bewegung der Filtervorrichtung (1) und der ersten Reinigungsvorrichtung (2) relativ zueinander geöffnet wird.

6. Filtersystem (3) nach Anspruch 5 , **dadurch gekennzeichnet, dass** die Reinigungslanze (21) einen als Stopfen (22) ausgebildeten Abschnitt (23) zum Verschließen der verschließbaren Öffnung (24) des Filterelementes (19) aufweist, wobei zweckmäßigerweise der als Stopfen (22) ausgebildete Abschnitt (23) am freien Ende (25) der Reinigungslanze (21) angeordnet ist, und wobei insbesondere die Reinigungsdüse (20) benachbart zum als Stopfen (22) ausgebildeten Abschnitt (23) angeordnet ist.

7. Filtersystem (3) nach Anspruch 4 bis 6, **dadurch gekennzeichnet, dass** an der Reinigungslanze (21) ein Federelement (43) angeordnet ist, insbesondere am freien Ende (25) der Reinigungslanze (21).

8. Filtersystem (3) nach einem der vorhergehenden Ansprüche, **dadurch gekennzeichnet, dass** die erste Reinigungsvorrichtung (2) im Reingasraum (9) angeordnet ist.

9. Filtersystem (3) nach einem der Ansprüche 4 bis 8, **dadurch gekennzeichnet, dass** das Filterelement (19) als Metallfilter, insbesondere als Metallfilterpatrone, ausgebildet ist.

10. Filtersystem (3) nach einem der vorhergehenden Ansprüche, **dadurch gekennzeichnet, dass** die zweite Reinigungsvorrichtung (29) mehrere Reinigungsdüsen (20) aufweist, wobei die Reinigungsdüsen (20) in Umfangsrichtung voneinander beabstandet sind, wobei zweckmäßigerweise die Reinigungsdüsen (20) in Umfangsrichtung voneinander äquidistant beabstandet sind.

11. Filtersystem (3) nach einem der vorhergehenden Ansprüche, **dadurch gekennzeichnet, dass** eine eine Reinigungsdüse (32) aufweisende dritte Reinigungsvorrichtung (33) im Rohgasraum (8) des Filtersystems (3) angeordnet ist, wobei zweckmäßigerweise die Reinigungsdüse (32) der dritten Reinigungsvorrichtung (33) radial von der Mittelachse X-X in Richtung Filtergehäusewandung (30) und in entgegengesetzter Richtung bewegbar ist.

12. Filtersystem (3) nach einem der vorhergehenden Ansprüche, **dadurch gekennzeichnet, dass** eine eine Reinigungsdüse (34) aufweisende vierte Reinigungsvorrichtung (35) im Reingasraum (9) des Filtersystems (3) angeordnet ist, wobei zweckmäßigerweise die Reinigungsdüse (34) der vierten Reinigungsvorrichtung (35) schwenkbar im Reingasraum (9) angeordnet ist.

13. Filtersystem (3) nach einem der vorhergehenden Ansprüche, **dadurch gekennzeichnet, dass** das Filtersystem (3) einen als Behälter (37) ausgebildeten Vorratsspeicher (38) für das Reinigungsfluid aufweist.

14. Filtersystem (3) nach einem der vorhergehenden Ansprüche, **dadurch gekennzeichnet, dass** die Filtervorrichtung (1) durch eine von einer Antriebseinheit (26) angetriebenen Verschiebeeinrichtung (27) bewegbar ist, wobei zweckmäßigerweise die Verschiebeeinrichtung (27) teleskopierbar ist.

15. Anordnung zur Aufreinigung von einem mit Partikeln beladenen Gasstrom eines Fluidisierungsapparates mittels eines Filtersystems (3), **dadurch gekennzeichnet, dass** das Filtersystem (3) nach einem der vorhergehenden Ansprüche ausgebildet ist und an dem Fluidisierungsapparat angeordnet ist.

## Claims

1. Filter system (3) for the purification of a gas flow laden with particles, wherein the filter system (3) comprising a filter housing (7) with a central axis X-X includes a filter device (1) separating the filter housing (7) into a dirty gas chamber (8) and a clean gas chamber (9), having a filter outside surface (16) and a filter inside surface (17), for separating the particles from the gas flow, and a first cleaning device (2) with a cleaning nozzle (20) for cleaning the filter device (1) when filtration activity is interrupted wherein, with filtration activity interrupted, the filter device (1) and the first cleaning device (2) may be moved relative to one another, so that the filter outside surface (16) and/or filter inside surface (17) of the filter device (1) contaminated by particles may be cleaned by the cleaning nozzle (20) of the first cleaning device (2), **characterised in that** a second cleaning device (29) with a cleaning nozzle (28) is located in the dirty gas chamber (8) of the filter system (3), wherein the cleaning nozzle (28) of the second cleaning device (29) is movable radially from the central axis X-X in the direction of the filter housing wall (30) and in the opposite direction.

2. Filter system (3) according to claim 1 **characterised in that**, with filtration activity interrupted, the filter device (1) may be moved relative to the first cleaning device (2).

3. Filter system (3) according to claim 1 or 2, **characterised in that** the filter device (1) may be moved in the axial direction of the central axis X-X.

4. Filter system (3) according to any of the preceding claims, **characterised in that** the filter device (1) has a number of filter elements (19) and the first cleaning device (2) has a number of cleaning lances (21) corresponding to the number of filter elements (19), wherein the filter device (1) expediently includes six filter elements (19) and the first cleaning device (2) six cleaning lances (21).

5. Filter system (3) according to any of the preceding claims, **characterised in that** each filter element (19) has an opening (24) closable by a cleaning lance (21), wherein each closable opening (24), when filtration activity is interrupted, is opened by the movement of the filter device (1) and the first cleaning device (2) relative to one another.

6. Filter system (3) according to claim 5, **characterised in that** the cleaning lance (21) has a section (23) in the form of a plug (22) for closing the closable opening (24) of the filter element (19), wherein expediently the section (23) in the form of a plug (22) is arranged at the free end (25) of the cleaning lance (21), and wherein in particular the cleaning nozzle (20) is arranged adjacent to the section (23) in the form of a plug (22).

7. Filter system (3) according to any of claims 4 to 6, **characterised in that** a spring element (43) is provided on the cleaning lance (21), in particular on the free end (25) of the cleaning lance (21).

8. Filter system (3) according to any of the preceding claims, **characterised in that** the first cleaning device (2) is located in the clean gas chamber (9).

9. Filter system (3) according to any of claims 4 to 8, **characterised in that** the filter element (19) is in the form of a metal filter, in particular a metal filter cartridge.

10. Filter system (3) according to any of the preceding claims, **characterised in that** the second cleaning device (29) has several cleaning nozzles (20) , wherein the cleaning nozzles (20) are spaced apart in the circumferential direction, wherein expediently the cleaning nozzles (20) are spaced apart, equidistant from one another in the circumferential direction.

11. Filter system (3) according to any of the preceding claims, **characterised in that** a third cleaning device (33) with a cleaning nozzle (32) is located in the dirty gas chamber (8) of the filter system (3), wherein expediently the cleaning nozzle (32) of the third cleaning device (33) may be moved radially from the central axis X-X in the direction of the filter housing wall (30) and in the opposite direction.

12. Filter system (3) according to any of the preceding claims, **characterised in that** a fourth cleaning device (35) with a cleaning nozzle (34) is located in the clean gas chamber (9) of the filter system (3), wherein expediently the cleaning nozzle (34) of the fourth cleaning device (35) is mounted pivotably in the clean gas chamber (9).

13. Filter system (3) according to any of the preceding claims, **characterised in that** the filter system (3) has a storage tank (38) for the cleaning fluid, in the form of a container (37).

14. Filter system (3) according to any of the preceding claims, **characterised in that** the filter device (1) may be moved by a displacing device (27) driven by a drive unit (26), wherein expediently the displacing device (27) is telescopic.

15. Arrangement for the purification by means of a filter system (3) of a gas flow of a fluidisation apparatus laden with particles, **characterised in that** the filter system (3) is designed according to any of the preceding claims and is fitted to the fluidisation apparatus.

## Revendications

1. Système filtrant (3) pour nettoyer un flux de gaz chargé en particules, dans lequel le système filtrant (3) comprenant un boîtier filtrant (7) présentant un axe médian X-X comprend un dispositif filtrant (1) séparant le boîtier filtrant (7) en une chambre de gaz brut (8) et en une chambre de gaz épuré (9), présentant une surface extérieure filtrante (16) et une surface intérieure filtrante (17) pour séparer les particules hors du flux de gaz et un premier dispositif de nettoyage (2) présentant une buse de nettoyage (20) pour nettoyer le dispositif filtrant (1) lorsque l'action de filtration est interrompue, dans lequel lorsque l'action de filtration est interrompue, le dispositif filtrant (1) et le premier dispositif de nettoyage (2) peuvent être déplacés l'un par rapport à l'autre si bien que la surface extérieure filtrante (16) et/ou la surface intérieure filtrante (17), contaminées par des particules, du dispositif filtrant (1) peuvent être nettoyées par la buse de nettoyage (20) du premier dispositif de nettoyage (2), **caractérisé en ce qu'**un deuxième dispositif de nettoyage (29) présentant une buse de nettoyage (28) est disposé dans la chambre de gaz brut (8) du système filtrant (3), dans lequel la buse de nettoyage (28) du deuxième dispositif de nettoyage (29) peut être déplacée radialement depuis l'axe médian X-X en direction de la paroi de boîtier filtrant (30) et dans la direction opposée.

2. Système filtrant (3) selon la revendication 1, **caractérisé en ce que** lorsque l'action de filtration est interrompue, le dispositif filtrant (1) peut être déplacé par rapport au premier dispositif de nettoyage (2).

3. Système filtrant (3) selon la revendication 1 ou 2, **caractérisé en ce que** le dispositif filtrant (1) peut être déplacé dans la direction axiale de l'axe médian X-X.

4. Système filtrant (3) selon l'une quelconque des revendications précédentes, **caractérisé en ce que** le dispositif filtrant (1) présente un nombre d'éléments filtrants (19) et le premier dispositif de nettoyage (2) présente un nombre de lances de nettoyage (21) correspondant au nombre d'éléments filtrants (19), dans lequel le dispositif filtrant (1) comprend de manière opportune six éléments filtrants (19) et le premier dispositif de nettoyage (2) comprend six lances de nettoyage (21).

5. Système filtrant (3) selon l'une quelconque des revendications précédentes, **caractérisé en ce que** chaque élément filtrant (19) présente une ouverture (24) pouvant être fermée par une lance de nettoyage (21), dans lequel chaque ouverture (24) pouvant être fermée est ouverte, lorsque l'action de sollicitation de filtration est interrompue, par le déplacement du dispositif filtrant (1) et du premier dispositif de nettoyage (2) l'un par rapport à l'autre.

6. Système filtrant (3) selon la revendication 5, **caractérisé en ce que** la lance de nettoyage (21) présente une section (23) réalisée en tant que bouchon (22) pour fermer l'ouverture (24) pouvant être fermée de l'élément filtrant (19), dans lequel de manière opportune la section (23) réalisée en tant que bouchon (22) est disposée sur l'extrémité (25) libre de la lance de nettoyage (21), et dans lequel en particulier la buse de nettoyage (20) est disposée de manière adjacente par rapport à la section (23) réalisée en tant que bouchon (22).

7. Système filtrant (3) selon la revendication 4 à 6, **caractérisé en ce qu'**un élément de ressort (43) est disposé sur la lance de nettoyage (21), en particulier sur l'extrémité libre (25) de la lance de nettoyage (21).

8. Système filtrant (3) selon l'une quelconque des revendications précédentes, **caractérisé en ce que** le premier dispositif de nettoyage (2) est disposé dans la chambre de gaz épuré (9).

9. Système filtrant (3) selon l'une quelconque des revendications 4 à 8, **caractérisé en ce que** l'élément filtrant (19) est réalisé en tant que filtre métallique, en particulier en tant que cartouche pour filtre métallique.

10. Système filtrant (3) selon l'une quelconque des revendications précédentes, **caractérisé en ce que** le deuxième dispositif de nettoyage (29) présente plusieurs buses de nettoyage (20), dans lequel les buses de nettoyage (20) sont tenues à distance les unes des autres dans la direction périphérique, dans lequel de manière opportune les buses de nettoyage (20) sont tenues à distance les unes des autres de manière équidistante dans la direction périphérique.

11. Système filtrant (3) selon l'une quelconque des revendications précédentes, **caractérisé en ce qu'**un troisième dispositif de nettoyage (33) présentant une buse de nettoyage (32) est disposé dans la chambre de gaz brut (8) du système filtrant (3), dans lequel de manière opportune la buse de nettoyage (32) du troisième dispositif de nettoyage (33) peut être déplacée radialement depuis l'axe médian X-X en direction de la paroi de boîtier filtrant (30) et dans la direction opposée.

12. Système filtrant (3) selon l'une quelconque des revendications précédentes, **caractérisé en ce qu'**un quatrième dispositif de nettoyage (35) présentant une buse de nettoyage (34) est disposé dans la chambre de gaz épuré (9) du système filtrant (3), dans lequel de manière opportune la buse de nettoyage (34) du quatrième dispositif de nettoyage (35) est disposée de manière à pouvoir pivoter dans la chambre de gaz épuré (9).

13. Système filtrant (3) selon l'une quelconque des revendications précédentes, **caractérisé en ce que** le système filtrant (3) présente un réservoir (38) réalisé en tant que contenant (37) pour le fluide de nettoyage.

14. Système filtrant (3) selon l'une quelconque des revendications précédentes, **caractérisé en ce que** le dispositif filtrant (1) peut être déplacé par un système de coulissement (27) entraîné par une unité d'entraînement (26), dans lequel de manière opportune le système de coulissement (27) est télescopique.

15. Ensemble de nettoyage d'un flux de gaz, chargé en particules, d'un appareil de fluidisation au moyen d'un système filtrant (3), **caractérisé en ce que** le système filtrant (3) est réalisé selon l'une quelconque des revendications précédentes et est disposé sur l'appareil de fluidisation.
